# EUROPEAN PATENT SPECIFICATION

(11) **EP 0 732 248 B1**
(45) Date of publication and mention of the grant of the patent: **24.11.1999**
(21) Application number: 95301650.8
(22) Date of filing: 14.03.1995
(51) Int. Cl.: B62B 1/12, A47C 13/00

(54) **Chair and hand truck**
Stuhl und Handkarre
Chaise et diable

(43) Date of publication of application: 18.09.1996
(73) Proprietor: Chang, Chien-I, Hou-Hu, Chia-Yi City (TW)
(72) Inventor: Chang, Chien-I, Hou-Hu, Chia-Yi City (TW)
(74) Representative: Abbie, Andrew Kenneth

(56) References cited:
- EP-A- 0 550 940

## Description

This invention relates to a chair which is convertible into a trolley.

EP-A-0550940 discloses a chair which is convertible into a trolley: comprising a back, a seat and leg means, the leg means comprising two frames pivoted together so as to intercross when the chair is in a chair mode and foldable so as to lie in substantially the same plane as the seat when the chair is in a trolley mode.

An object of this invention is to provide a more convenient and better chair which is convertible into a trolley.

The present invention provides a chair which is convertible into a trolley: comprising a back, a seat and leg means, the leg means comprising two frames pivoted together so as to intercross when the chair is in a chair mode and foldable so as to lie in substantially the same plane as the seat when the chair is in a trolley mode, characterised by said leg means having a hook device for engaging said seat when the chair is in said trolley mode.

Preferably, one of said frames of said leg means is pivotally connected to a front portion of said seat whereby said one of said frames is pivotable through substantially 180° whilst folded from its position in the trolley mode extending outwardly from the front portion of the seat to a position extending outwardly from the rear of the seat to define a storage mode in which said one of said frames extends a smaller distance outwardly from the seat than when in the trolley mode.

In a preferred embodiment described hereinafter, said two frames comprise a U-shaped rod frame and a rectangular rod frame, and said seat comprises: hangers for pivotally connecting with an upper end of said U-shaped rod frame; bolt holes for receiving pivotal bolt means to pivotally mount said back to said seat; supporters for supporting an upper transverse rod of said rectangular rod frame in said chair mode; and a position hole for engaging with said hook device in said trolley mode, a bottom transverse rod of said U-shaped rod frame functioning as a foot in said chair mode and a pull rod in said trolley mode, a bottom transverse rod of said rectangular rod frame functioning as a foot in said chair mode, said hook device being provided between two opposite rods of said rectangular rod frame extending between said transverse rods thereof, and said back being shaped as a U, having a bolt shaft connected with two bottom ends of said back, and a respective wheel mounted at each end of said bolt shaft, said wheels being rotatable on the ground in said trolley mode.

In order that the present invention may be well understood, the above-mentioned preferred embodiment thereof, which is given by way of example only, will be described with reference to the accompanying drawings, in which:
Figure 1 is an exploded perspective view of a chair which is convertible into a trolley;
Figure 2 is a cross-sectional view of the chair of Figure 1 in a chair mode;
Figure 3 is a cross-sectional view of the chair of Figure 1 being collapsed from the position shown in Figure 2;
Figure 4 is a cross-sectional view of the chair of Figure 1 in a trolley mode;
Figure 5 is a view from the rear of the chair of Figure 1 in a trolley mode; and
Figure 6 is a view from the rear of the chair of Figure 1 in a storage mode.

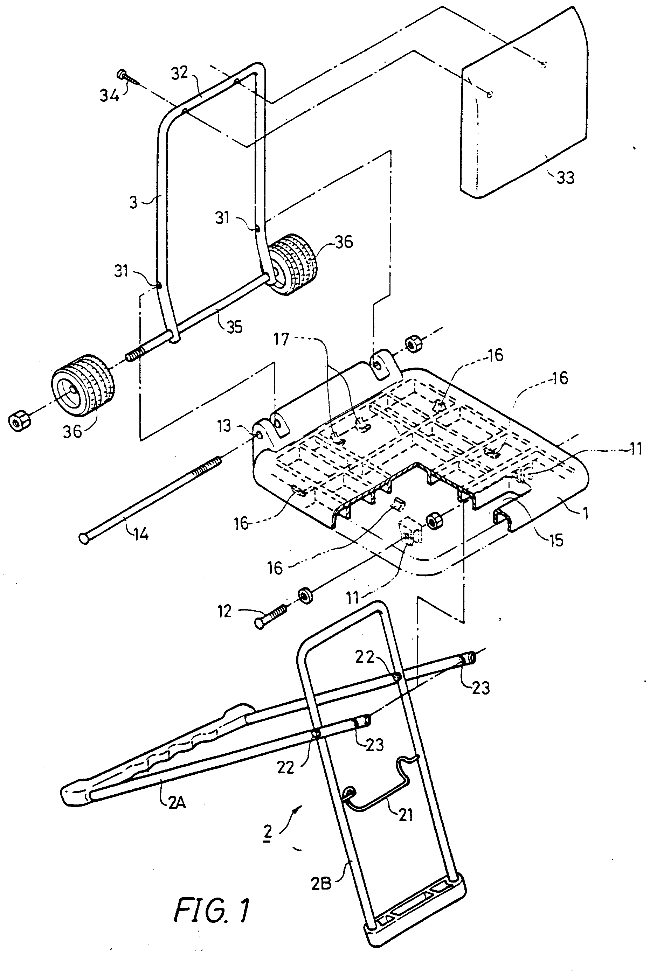

Referring to the drawings, Figure 1 shows a chair which comprises a seat 1, a cross frame, or leg means, 2 and a back, or back frame, 3 as main components.

The seat 1 comprises: a set of hangers 11 for receiving a pivotal member 12 such as a pin, or a shaft to combine the cross frame 2 with the seat 1; a set of shaft, or bolt, holes 13 for a pivotal member 14 such as a shaft, or a threaded rod to mount the back frame 3 to the seat 1; a position hole 15 for engaging with a hook device, or hook, 21 of the cross frame 2 and a plurality of retainers 16 for retaining the cross frame 2 in the trolley mode or in the storage mode.

The cross frame 2 has a U-shaped rod frame 2A and a rectangular rod frame 2B pivoted together by means of pivotal members 22 so as to intercross when the chair is in the chair mode. The U-shaped rod frame 2A has a longer length and a longer width than that of the rectangular rod frame 2B. The U-shaped rod frame 2A has a hole 23 near each of two free ends for receiving the pivotal member, or members, 12 so as to pivotally connect the cross frame 2 with the hangers 11 of the seat 1. A bottom transverse rod of the U-shaped rod frame 2A acts as a foot of the chair in the chair mode or as a pulling rod in the trolley mode. The rectangular rod frame 2B has an upper transverse rod which rests on supporters 17 fixed on the bottom of the seat 1 and a bottom transverse rod which acts as a foot of the chair when the chair is in the chair mode. The hook 21 is fixed between two vertical rods of the rectangular rod frame 2B extending between the transverse rods thereof and fits in the position hole 15 of the seat 1 to maintain the chair in the trolley mode. When the chair is collapsed, both the U-shaped rod frame 2A and the rectangular rod frame 2B are held stably by the retainers 16 of the seat 1, preventing loosening of the seat 1.

The back frame 3 is U-shaped, having a bolt hole 31 in each of two opposite vertical rods. The pivotal member 14 fits in each hole 31 and also in the bolt holes 13 of the seat 1 so as to mount the back frame 3 to the seat 1. A transverse rod 32 of the back frame 3 has two screw holes for screws 34. The screws 34 are fitted in the screw holes to fix a back cushion 33 on the back frame 3. A transverse shaft rod, or bolt shaft, 35 is fixed through each end of each of the two opposite vertical rods, and a respective wheel 36 is fixed firmly at each of two ends of the transverse shaft rod 35, the wheels 36 being rotatable on the ground when the chair is in the trolley mode.

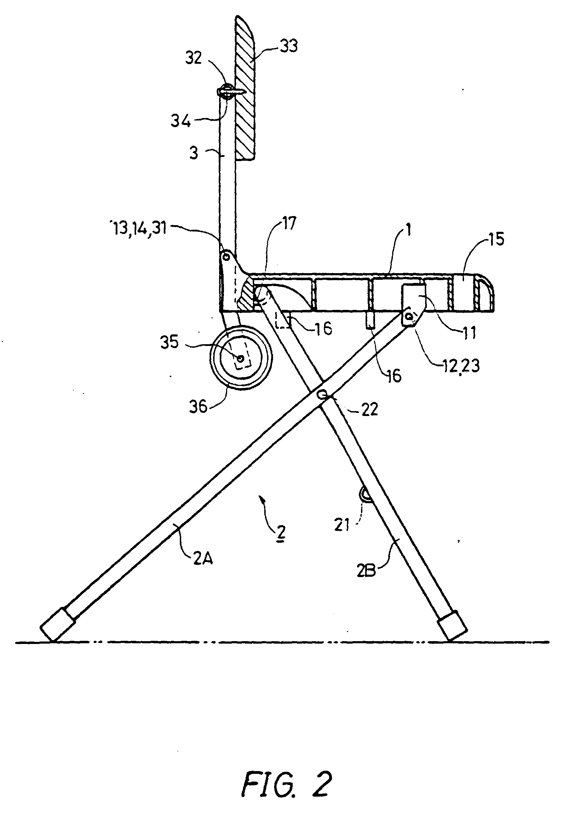

Figure 2 shows the chair in the chair mode, with the cross frame 2 intercrossing in an X shape, with the respective bottom transverse rods thereof standing on the ground. An upper end of the U-shaped rod frame 2A connects pivotally with the seat 1 by means of the pivotal members 12 engaging with the hangers 11. An upper end of the transverse rod of the rectangular rod frame 2B rests on the supporters 17. The back frame 3 is located upright to the seat 1, and the back cushion 33 is fixed to the back frame 3 vertically for the back of a user to rest on.

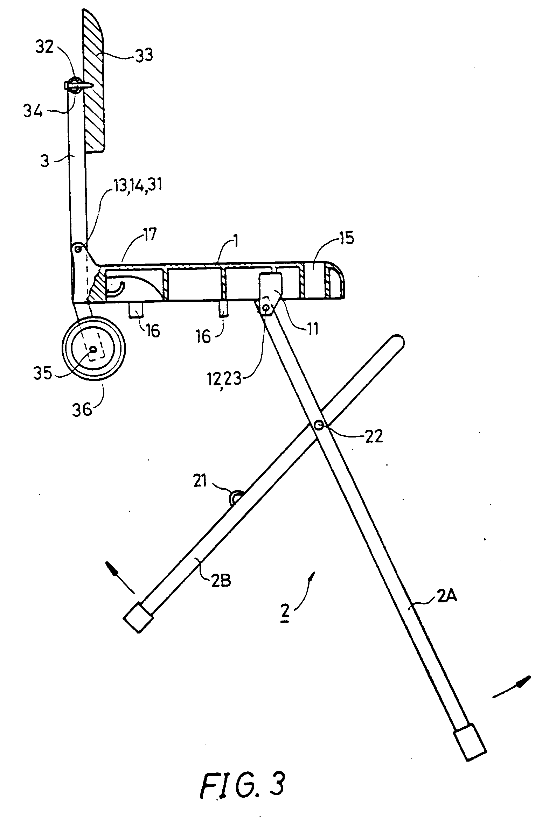

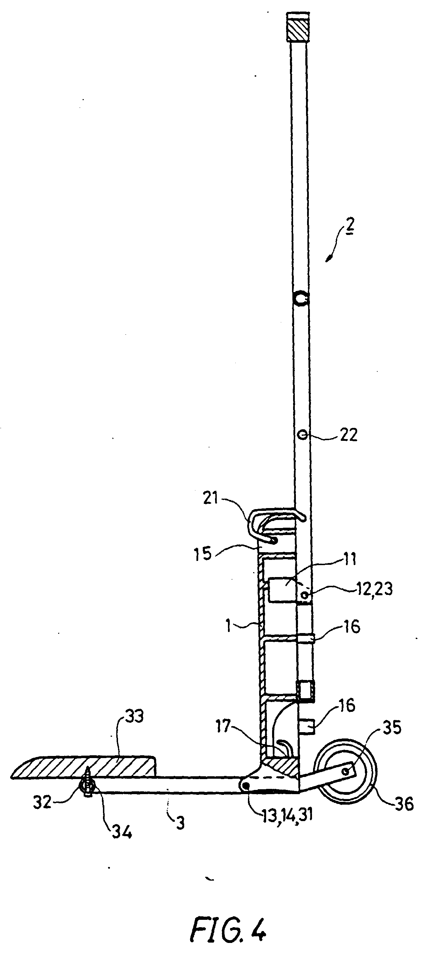

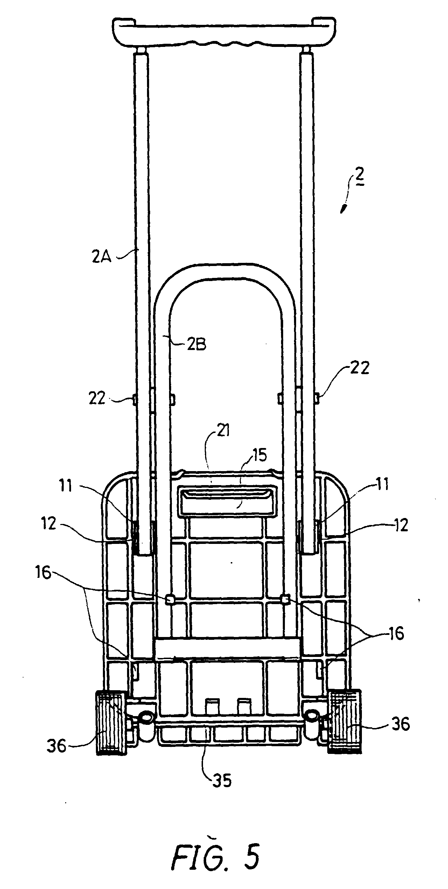

Referring to Figures 3 and 4, the operation of transforming the chair from the chair mode to the trolley mode will be described. Firstly, the upper transverse rod of the rectangular rod frame 2B of the cross frame 2 is separated from the supporters 17, with the rectangular rod frame 2B being folded to align with the U-shaped rod frame 2A. Then the folded cross frame 2 is pushed to the front of seat 1 until the hook 21 is aligned with the position hole 15, with the two opposite vertical rods of both the U-shaped rod frame 2A and the rectangular rod frame 2B engaging with the retainers 16 as shown in Figures 4 and 5. The hook 21 is then engaged with the position hole (15) to lock the chair in the trolley mode.

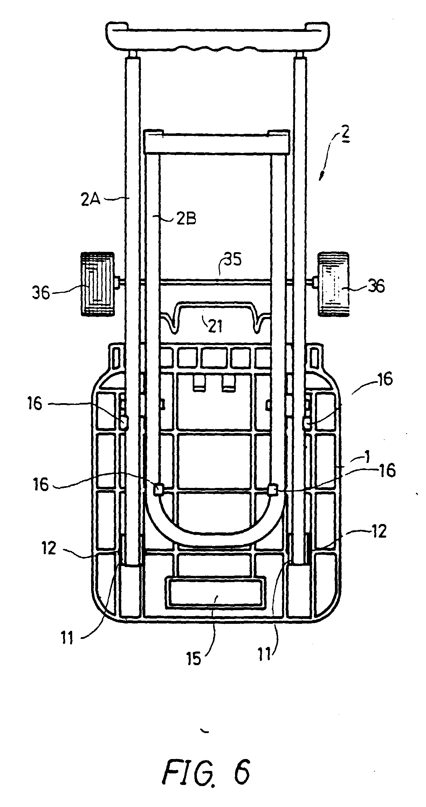

Figure 6 shows the chair in the storage mode. From the trolley mode, the folded cross frame 2 is pushed toward the rear of the seat 1 until the folded cross frame 2 may rest in a position extending outwardly from the rear of the seat 1.

The illustrated chair has a simple structure, utilizing the hook 21 and preferably the retainers 16 to keep the chair stably in the trolley mode.

Furthermore, the chair is convenient to manufacture, and easily transformed between modes.

It is also possible to keep the chair stably in each mode.

## Claims

1. A chair which is convertible into a trolley: comprising a back (3), a seat (1) and leg means (2), the leg means comprising two frames (2A, 2B) pivoted together so as to intercross when the chair is in a chair mode and foldable so as to lie in substantially the same plane as the seat when the chair is in a trolley mode, characterised by said leg means having a hook device (21) for engaging said seat when the chair is in said trolley mode.

2. A chair as claimed in claim 1, wherein one (2A) of said frames (2A, 2B) of said leg means (2) is pivotally connected to a front portion of said seat whereby said one (2A) of said frames is pivotable through substantially 180° whilst folded from its position in the trolley mode extending outwardly from the front portion of the seat to a position extending outwardly from the rear of the seat to define a storage mode in which said one of said frames extends a smaller distance outwardly from the seat than when in the trolley mode.

3. A chair as claimed in claim 1, wherein said two frames (2A, 2B) comprise a U-shaped rod frame (2A) and a rectangular rod frame (2B), and said seat (1) comprises: hangers (11) for pivotally connecting with an upper end of said U-shaped rod frame; bolt holes (13, 31) for receiving pivotal bolt means (14) to pivotally mount said back (3) to said seat; supporters (17) for supporting an upper transverse rod of said rectangular rod frame in said chair mode; and a position hole (15) for engaging with said hook device (21) in said trolley mode, a bottom transverse rod of said U-shaped rod frame functioning as a foot in said chair mode and a pull rod in said trolley mode, a bottom transverse rod of said rectangular rod frame functioning as a foot in said chair mode, said hook device (21) being provided between two opposite rods of said rectangular rod frame extending between said transverse rods thereof, and said back (3) being shaped as a U, having a bolt shaft (35) connected with two bottom ends of said back, and a respective wheel mounted at each end of said bolt shaft, said wheels being rotatable on the ground in said trolley mode.

## Patentansprüche

1. Ein Stuhl, der in einen Handkarren umwandelbar ist, mit: einer Lehne (3), einem Sitz (1) und einer Beinvorrichtung (2), wobei die Beinvorrichtung zwei Rahmen (2A, 2B) aufweist, welche so schwenkbeweglich miteinander verbunden sind, daß sie einander überkreuzen, wenn der Stuhl in einem Stuhlmodus ist und welche faltbar sind, so daß sie im wesentlichen in der gleichen Ebene wie der Sitz liegen, wenn der Stuhl in einem Handkarrenmodus ist, dadurch gekennzeichnet, daß die Beinvorrichtung eine Hakenvorrichtung (21) aufweist, welche mit dem Sitz in Eingriff gelangt, wenn der Stuhl in dem Handkarrenmodus ist.

2. Ein Stuhl nach Anspruch 1, wobei einer (2A) der Rahmen (2A, 2B) der Beinvorrichtung (2) schwenkbeweglich mit einem vorderen Abschnitt das Sitzes verbunden ist, wobei der eine (2A) der Rahmen um im wesentlich 180° schwenkbar ist, wenn er von seiner Position im Handkarrenmodus, vom vorderen Abschnitt des Sitzes aus sich nach außen erstreckend, in eine Position gefaltet wird, welche er sich von der Rückseite des Sitzes nach außen erstreckt, um einen Aufbewahrungsmodus zu bilden, in dem der eine der Rahmen sich von dem Sitz um einen kleineren Betrag aus nach außen erstreckt als im Handkarrenmodus.

3. Ein Stuhl nach Anspruch 1, wobei die beiden Rahmen (2A, 2B) einen U-förmigen Stabrahmen (2A) und einen rechteckförmigen Stabrahmen (2B) aufweisen und wobei der Sitz (1) aufweist: Aufhänger (11) für eine schwenkbewegliche Verbindung mit einem oberen Ende des U-förmigen Stabrahmens; Bolzenöffnungen (13, 31) zur Aufnahme von Schwenkbolzenmitteln (14), um die Lehne (3) schwenkbeweglich mit dem Sitz zu verbinden; Stützen (17) zum Lagern eines oberen Querstabes des rechteckförmigen Stabrahmens im Stuhlmodus; und eine Positionieröffnung (15) für einen Eingriff mit der Hakenvorrichtung (21) in dem Handkarrenmodus, wobei ein bodenseitiger Querstab des U-förmigen Stabrahmens als Fuß in dem Stuhlmodus dient und als Zugstange im Handkarrenmodus dient, wobei ein bodenseitiger Querstab des rechteckförmigen Stabrahmens als Fuß in dem Stuhlmodus dient, und wobei die Hakenvorrichtung (21) zwischen zwei gegenüberliegenden Stäben des rechteckförmigen Stabrahmens, welche sich zwischen den Querstäben hiervon erstrecken, angeordnet ist, und die Lehne (3) in Form eines U ausgebildet ist mit einer Bolzenwelle (35), welche zwischen zwei Bodenenden der Lehne verbunden ist, wobei jeweils ein Rad an jedem Ende der Bolzenwelle angeordnet ist, wobei die Räder in dem Handkarrenmodus auf dem Boden abrollbar sind.

## Revendications

1. Chaise convertible en diable, comprenant un dossier (3), un siège (1) et des moyens formant pieds (2), les moyens formant pieds comportant deux bâtis (2A, 2B) pivotant l'un par rapport à l'autre de façon à se croiser l'un l'autre lorsque la chaise est en mode chaise et pouvant être escamotés de façon à se trouver sensiblement dans le même plan que le siège lorsque la chaise est en mode diable, caractérisée en ce que lesdits moyens formant pieds ont un dispositif d'accrochage 21 destiné à s'engager sur ledit siège lorsque la chaise est dans ledit mode diable.

2. Chaise selon la revendication 1, dans laquelle un (2A) desdits bâtis (2A, 2B) desdits moyens formant pieds (2) est articulé avec une partie avant dudit siège, grâce à quoi ledit bâti (2A) peut pivoter sensiblement sur 180° pendant son escamotage depuis sa position dans le mode diable s'étendant vers l'extérieur depuis la partie avant du siège jusqu'à une position s'étendant vers l'extérieur depuis l'arrière du siège pour définir un mode rangement dans lequel ledit bâti (2A) s'étend, vers l'extérieur du siège, sur une distance inférieure à celle du mode diable.

3. Chaise selon la revendication 1, dans laquelle lesdits deux bâtis (2A, 2B) comprennent un bâti tubulaire (2A) en U et un bâti tubulaire rectangulaire (2B) et ledit siège (1) comprend: des ferrures de suspension (11) destinées à réaliser un assemblage pivotant avec une extrémité supérieure dudit bâti tubulaire en U, des trous (13, 31) de boulons pour recevoir un boulon pivotant servant à monter de manière pivotante ledit dossier (3) sur ledit siège, des supports (17) destinés à supporter un tube transversal supérieur dudit bâti tubulaire rectangulaire dans ledit mode chaise, et un trou de positionnement (15) destiné à coopérer avec ledit dispositif d'accrochage (21) dans ledit mode diable, un tube transversal inférieur dudit bâti tubulaire en U servant de pied dans ledit mode chaise et de tige de traction dans ledit mode diable, un tube transversal inférieur dudit bâti tubulaire rectangulaire servant de pied dans ledit mode chaise, ledit dispositif d'accrochage (21) étant disposé entre deux tubes opposés dudit bâti tubulaire rectangulaire s'étendant entre lesdits tubes transversaux de celui-ci, et ledit dossier (3) étant en forme de U, ayant un essieu (35) relié à deux extrémités inférieures dudit dossier, et une roulette respective montée à chaque extrémité dudit essieu, lesdites roulettes pouvant tourner sur le sol dans ledit mode diable.
